# EUROPEAN PATENT SPECIFICATION

(11) **EP 4 233 490 B1**
(45) Date of publication and mention of the grant of the patent: **02.07.2025**
(21) Application number: 21807010.0
(22) Date of filing: 04.11.2021
(51) Int. Cl.: H05B 3/78, F24H 3/04, F24H 9/1863, H05B 3/06, H05B 3/44, F24H 9/00

(54) **ELECTRIC HEATING SYSTEM FOR HEATING A FLUID FLOW**
ELEKTRISCHES HEIZSYSTEM ZUM ERWÄRMEN EINES FLUIDSTROMS
SYSTÈME DE CHAUFFAGE ÉLECTRIQUE POUR CHAUFFER UN ÉCOULEMENT DE FLUIDE

(30) Priority: 24.11.2020 GB 202018469
(43) Date of publication of application: 30.08.2023
(73) Proprietor: University Of Southampton, Southampton SO17 1BJ (GB)
(72) Inventor: ROMEI, Federico, Southampton SO17 1BJ (GB); ROBINSON, Matthew, Southampton SO17 1BJ (GB)
(74) Representative: Page White Farrer
(86) International application number: PCT/EP2021/080614
(87) International publication number: WO 2022/111968

(56) References cited:
- JP-A- 2018 116 803
- US-A- 3 244 860
- ROMEI F ET AL: "Manufacturing of a high-temperature resistojet heat exchanger by selective laser melting", ACTA ASTRONAUTICA, PERGAMON PRESS, ELMSFORD, GB, vol. 138, 22 May 2017 (2017-05-22), pages 356 - 368, XP085147695, ISSN: 0094-5765, DOI: 10.1016/J.ACTAASTRO.2017.05.020

## Description

The present invention relates to an electric heating system for heating a fluid flow and to a method of heating a fluid flow using such a system. The present invention has particular application to the use of such an electric heating system to provide, for example, heaters for resistojet thrusters in spacecraft or flow heaters.

Electrothermal thrusters are a class of electric propulsion thrusters for satellites that convert electric energy into thermal energy, increasing the stagnation temperature of a gaseous propellant. The higher the stagnation temperature, the higher the performance. The resistojet is a technology within the electrothermal thruster class that heats the gas by Joule (or resistive) heating of a solid heating element. High-temperature resistojets are attractive as they provide high performance; however the gas temperature is limited by the operating temperature of the heater.

A conventional resistojet uses an electrical heater to directly or indirectly heat a propellant in gaseous form. The gas flows through a heat exchanger that is employed to maximise the thermal efficiency of the resistojet, by limiting the external temperature of the device. The design of high-temperature resistojets has been obtained in the past using direct heating of the propellant with concentric tubular heat exchangers, which successfully demonstrated operation of this design concept. However, the manufacturing of this design involved the combination of two manufacturing techniques, Chemical Vapour Deposition (CVD) and Electron Beam (EB) welding. As a result, the assembly procedure was a long and complex process.

A known high-temperature resistojet comprises a concentric tubular heater which consists of a series of long, thin tubular elements fabricated by chemical vapour deposition which are arranged concentrically. The tubes were joined at their ends by means of small struts, attached by electron beam welding. Such a tubular heater structure suffered from the problem of premature failure due to the combination of significant thermal expansion, generated by the extreme heating, and manufacturing defects derived from the numerous welding joints that the heater assembly required.

As disclosed in papers by (1) F. Romei, A.N. Grubišić, D. Gibbon, entitled "Manufacturing of a High-Temperature Resistojet Heat Exchanger by Selective Laser Melting", Acta Astronaut. 138 (2017) 356-368. doi:10.1016/j.actaastro.2017.05.020, (2) F. Romei and A.N. Grubišić, entitled "Validation of an additively manufactured resistoj et through experimental and computational analysis", Acta Astronaut. (2020). doi:10.1016/j.actaastro.2019.10.046, and (3) M. Robinson, A. Grubišić, G. Rempelos, F. Romei, C. Ogunlesi and S. Ahmed, entitled "Endurance testing of the additively manufactured STAR resistojet", Mater. Des. (2019) 107907. doi:10.1016/J.MATDES.2019.107907, a concentric tubular heater was manufactured as a single monolithic component using metal additive manufacturing. However, that tubular heater structure also suffered from the problem of premature failure due to the thermal expansion generated by the cycling heater operation.

Further aspects and features of an additively manufactured resistojet are disclosed in the following presentations that were made at the 36th Internationmal Electric propulsion Conference, University of Vienna, Vienna, Austria, 15-20 September 2019: (i) Romei, F., Robinson, M. D., Ogunlesi, C., Gibbon, D. and Grubisic, A. N., entitled "The development and qualification of the STAR resistojet system for telecommunications applications"; (2) Robinson, M. D., Grubisic, A. N., Romei, F. and Ogunlesi, C., entitled "Lifetime investigations of an additively manufactured high-temperature resistojet heat exchanger from tantalum"; and (3) Ogunlesi, C., Romei, F., Robinson, M. D., Grubisic, A. N. And Gibbon, D., entitled "Structural effects on the high temperature performance of the Super High Temperature Additive Manufactured Resistojet (STAR)".

JP2018-116803A discloses an electric heating system for heating a fluid flow having the features of the pre-characterising portion of claim 1.

Despite these extensive efforts to produce a resistojet having a structural design which can overcome the problems described above for the monolithic heater design, nevertheless there remains a need in the art for an electric heating system for heating a fluid flow which can be used as a resistojet and has a high level of reliability, and which preferably can also be additively manufactured, for example by 3D printing.

The present invention therefore aims to provide an electric heater design that reliably operates at high temperatures, for example as high as 3,500 K, and can achieve enhanced reliability as compared to known resistojets.

The present invention also aims to provide an electric heater design that is compact and can be manufactured at low cost, for example using an additive manufacturing process, otherwise known in the art as "3D printing", which can produce a monolithic electric heater. A preferred additive manufacturing process for use in the present invention is known in the art as Selective Laser Melting (SLM).

The present invention also aims to provide an electric heater design that exhibits a high thermal efficiency.

The present invention also aims to provide an electric heater design that may be used in other applications, in addition to use in a resistojet, for providing a heated fluid flow.

The present invention provides an electric heating system for heating a fluid flow, the system comprising:
a housing having an inlet for a fluid flow to be heated by the electric heating system and an outlet for the fluid flow which has been heated by the electric heating system; and
a resistive heater mounted within the housing, the resistive heater comprising:
   a fluid input and a fluid output which are fluidically coupled, respectively, to the inlet and the outlet,
   a plurality of annular walls composed of an electrically conductive material, the walls being nested to define a plurality of annular flow channels which are serially arranged concentrically about a longitudinal axis, wherein the walls extend between opposite first and second ends of the resistive heater which are mutually separated along the longitudinal axis, and
   first and second electrical terminals for connection to a source of electrical energy to heat the walls of the resistive heater, the first and second electrical terminals being electrically connected to respective first and second walls which are mutually adjacent and comprise an outer pair of the walls which are located at a radially outer side of the resistive heater,
   wherein the plurality of annular walls are mechanically connected together whereby adjacent flow channels have opposite fluid flow directions and are connected at adjacent ends of the respective channels to define an alternating serpentine flow path which has an input end at the fluid input and an output end at the fluid output, wherein the input and output ends are respectively located at radially outer and radially inner positions relative to the longitudinal axis, and
   wherein the plurality of annular walls are electrically connected together to define a continuous electrically conductive path extending between the first and second electrical terminals, the conductive path having a first part which extends from the first wall to a centre of the resistive heater and a second part which extends from the centre of the resistive heater to the second wall.

The present invention further provides a method of heating a fluid flow using such a system method of producing a high-temperature fluid flow, the method comprising the steps of:
a) providing an electric heating system according to the present invention;
b) supplying a fluid to be heated to the fluid input of the resistive heater and thereby to flow along the alternating serpentine flow path to the fluid output of the resistive heater, the supplied fluid having a pressure greater than an external gas pressure surrounding an exterior of the housing;
c) applying an electrical potential across the first and second terminals to heat the fluid flow in the alternating serpentine flow path by the resistive heater; and
d) expelling the heated fluid flow from the outlet of the housing.

Preferred features of the system and method of the present invention are defined in the respective dependent claims.

The system and method of the present invention may be employed in any application where a fluid is required to be heated to high temperatures, for example as high as 3,500 K.

The preferred embodiments of the present invention can provide an electric heating system for heating a fluid flow comprising a resistive heater which is compact and can be manufactured at low cost, in particular for example by using an additive manufacturing process such as Selective Laser Melting (SLM) which can produce a monolithic resistive heater.

The preferred embodiments of the present invention can provide a resistive heater design which allows the high-temperature elements of the resistive heater to freely expand and contract under thermal load. This improvement is fundamental for the electric heater system to be able to meet typical lifetime requirements for a space mission when the resistive heater is used as a resistojet in a spacecraft. Laboratory environment lifetime tests have shown that the preferred embodiments of the present invention can provide a resistive heater design which can exhibit a heater lifetime in excess of 6,000 cycles of heating/cooling, exceeding the typical mission requirements of a spacecraft such as a satellite.

The preferred embodiments of the present invention can provide a resistive heater which is composed of refractory metals in pure or alloy forms, which can enable heating of the fluid to temperatures as high as 3,500 K. Alternatively, non-refractory metals, e.g. nickel alloys or steels, may be used to manufacture the resistive heater for applications in which the maximum temperature is not the only requirement, for example, where corrosion or oxidation are potential significant problems. The resistive heater of the preferred embodiments of the present invention can be designed to achieve any given exit temperature within this range, while maintaining high thermal efficiency and exhibiting heater integrity over thousands of heating cycles. Additionally, when the resistive heater has an integral monolithic design, the resistive heater can provide greater freedom of design, plus quicker and cheaper production, as compared to conventional assembly methods using multiple parts and materials. Moreover, manufacture of the integral monolithic design, the resistive heater by an additive manufacturing technique has the advantage that the future cost of additive manufacturing techniques (AM) is projected to decrease, while the quality of prints and the choice of materials is projected to increase, enhancing the benefits and advantages of the resistive heater in accordance with the preferred embodiments of the present invention.

The preferred embodiments of the present invention can provide improved heat transfer to the fluid through the use of a wall structure in which a first set of walls defines annular flow passages and a second set of walls sits inside the annular flow passages created by the first set of walls.

The preferred embodiments of the present invention can provide electrical terminals which are positioned at the exterior of the resistive heater, where the temperature is low. This simplifies the mechanical connection of the electrical terminals, and reduces conductive heat loss from the resistive heater, improving thermal efficiency.

The preferred embodiments of the present invention can provide that the resistive heater does not form part of a housing, functioning in use as a pressure envelope, of the electric heater system. Therefore, the resistive heater can be manufactured without welding.

The preferred embodiments of the present invention can provide that the resistive heater can be manufactured by an additive manufacturing process such as Selective Laser Melting (SLM) which can produce a monolithic electric heater. Using such a process, large quantities of resistive heaters can be produced in a single printing process, and the resistive heaters can be manufactured with high melting point materials, such as nickel alloys and refractory alloys which are known to those skilled in the art, for example from the publications identified hereinabove.

The resistive heater of the preferred embodiments of the present invention utilises a hybrid of different heat exchanger and heater concepts, particularly when manufactured as a single component in one additive manufacturing (AM) process. The resistive heater has two main functions: the resistive heater generates heat using electrical resistance when a current is passed therethrough, and the resistive heater convectively heats a fluid flowing therethrough. The resistive heater of the preferred embodiments of the present invention can readily be configured to achieve high fluid temperature, at high thermal efficiency, in a compact and low-cost package. High temperature is achieved by means of a circulating flow geometry, whereby the fluid makes a series of passes through the resistive heater, prolonging the fluid heating time.

Using an additive manufacturing process, the resistive heater of the preferred embodiments of the present invention can readily incorporate features such and meshes to increase heat transfer effectiveness, which can maximise the fluid temperature for a given structure temperature. The circulating flow geometry enables high thermal efficiency by introducing cold fluid to be heated at the outside diameter of the resistive heater, which captures radiant heat lost from the resistive heater as the fluid circulates inwardly towards a centre in fluid communication with the fluid outlet of the resistive heater.

Embodiments of the present invention will now be described, by way of example only, with reference to the following drawings, in which:
Figure 1 is a schematic diagram showing the general structure of an electric heater system incorporating a resistive heater in accordance with the present invention;
Figure 2 is a schematic diagram of the electric heater system of Figure 1 but modified to provide a housing, or pressure envelope, which provides that the fluid heated through the resistive heater is expanded and remains in the subsonic/sonic flow regime, and the exiting fluid retains a high static temperature, in accordance with one embodiment of the present invention;
Figure 3 is a schematic diagram of the electric heater system of Figure 1 but modified to provide a housing, or pressure envelope, which provides that the fluid heated through the resistive heater is expanded and accelerated to the supersonic/hypersonic flow regime, and the exiting fluid has a low static temperature, in accordance with another embodiment of the present invention;
Figure 4 is a perspective side view, from an outflow end, and partly cut away of a monolithic resistive heater in accordance with a further embodiment of the present invention;
Figure 5 is a schematic diagram which is a longitudinal cross-section though one half of the monolithic resistive heater of Figure 4 and schematically illustrates fluid flow and electrical connections in the monolithic resistive heater; and
Figure 6 is a perspective side view, from an outflow end, and partly cut away of a monolithic resistive heater in accordance with a further embodiment of the present invention.

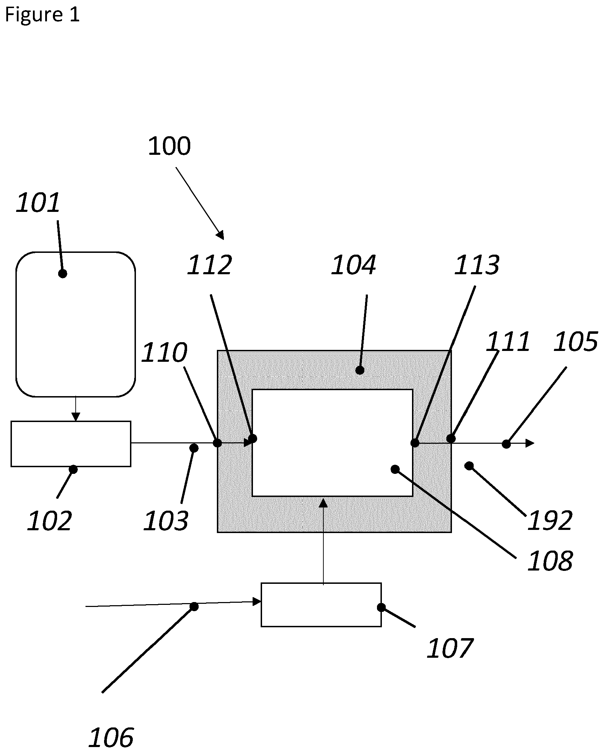

Referring to Figure 1, which shows the general arrangement of an electric heating system in accordance with the preferred embodiments of the present invention, the present invention provides an electric heating system, designated generally as 100, for heating a fluid flow. The fluid flow is provided from a fluid source 101 by a feed system 102. The fluid may comprise a single fluid component or a mixture of a plurality of fluid components. The system 100 comprises a housing 104, otherwise known in the art as a pressure envelope, having an inlet 110 for a fluid inflow 103, to be heated by the electric heating system 100, and an outlet 111 for the fluid outflow 105, which has been heated by the electric heating system 100. A resistive heater 108 is mounted within the housing 104 by a mounting mechanism (not shown). The resistive heater 108 comprises a fluid input 112 and a fluid output 113 which are fluidically coupled, respectively, to the inlet 110 and the outlet 111. The fluid is supplied by the feed system 102 at a desired pressure and flow rate to the inflow 103.

The system 100 further comprises power electronics 107, located exterior of the housing 104, for providing electrical energy to the resistive heater 108 from a source of electrical energy 106. In the illustrated embodiments of the present invention, the resistive heater 108 is configured to be electrically connected by a wired connection to the source of electrical energy 106.

The source of electrical energy 106 is configured to supply a direct current, or an alternating current at any desired frequency, which heats the resistive heater 108.

The fluid flows through the resistive heater 108, which releases thermal energy and heats the fluid, and the total enthalpy of the outflow 105 is increased with respect to the enthalpy of the inflow 103.

In the illustrated embodiments of the present invention, a single resistive heater 108 is located within the housing 104. However, in alternative embodiments of the present invention a plurality of the resistive heaters 108 are located within the housing 104, and the resistive heaters 104 may be arranged in series or in parallel relative to the inflow 103 and outflow 105. In addition, the plurality of the resistive heaters 104 may be arranged electrically in series or in parallel.

In the preferred embodiments of the present invention, the electric heating system 100 is a resistojet and is configured for installation into a spacecraft, for use in moving the spacecraft in space.

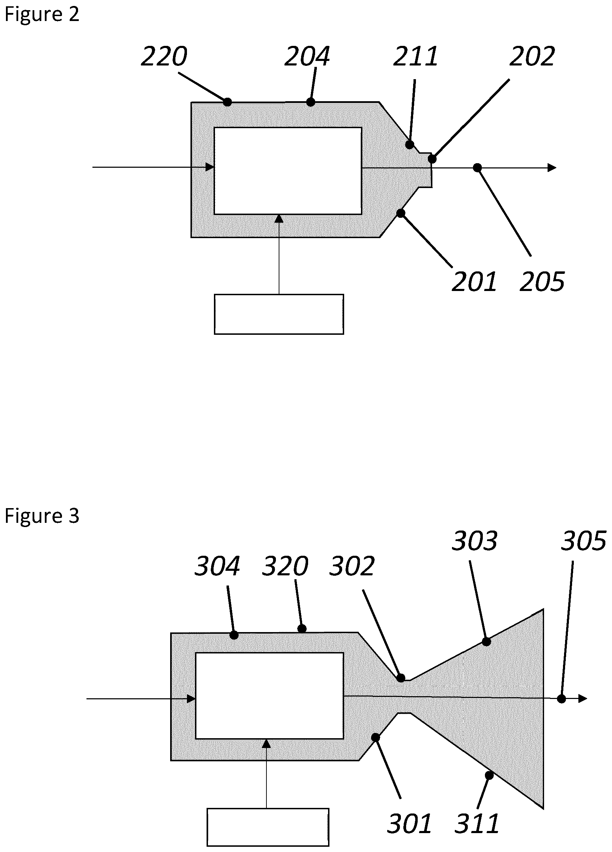

Figure 2 illustrates a first preferred embodiment of the present invention, in which the outlet 211 for the fluid outflow 205 has a converging shape defined by a frustoconical wall 201 of the housing 204. In use, such an outlet 211 expels the heated fluid through an orifice or orifices 202 at velocities less than or equal to the speed of sound in the fluid, retaining a high static temperature in the fluid. The degree of convergence of the frustoconical wall 201 may be varied, to change the outflow velocity and static temperature.

Figure 3 illustrates a second preferred embodiment of the present invention, in which the outlet 311 for the fluid outflow 305 is integrated with the housing 304 or achieved with additional components. The outlet 311, is made with a converging section 301, a throat 302 and a diverging section 303. Such an outflow 305, when operating with back pressure within the housing sufficiently higher than the downstream or ambient pressure, expels the heated fluid at velocities greater than the speed of sound in the fluid. A cooler, high-velocity stream is thus produced. The degree of divergence of the duct may vary, to change the outflow velocity and static temperature.

In the embodiments of Figures 2 and 3, the outlet 211, 311 may be integral with a main body 220, 230 of the housing 204, 304 or may be comprised of additional components which are fitted to the main body 220, 230 of the housing 204, 304. The use of such additional components may increase the robustness of the electric heating system with respect to thermal stresses, permitting operation at higher temperatures for longer periods, as compared to the use of an integral housing including the outlet for the high temperature fluid outflow.

In a further alternative embodiment, which is not illustrated, the outlet for the fluid outflow may be straight, without any converging or diverging shape, with an orifice having a smaller diameter than the diameter of the main body of the housing.

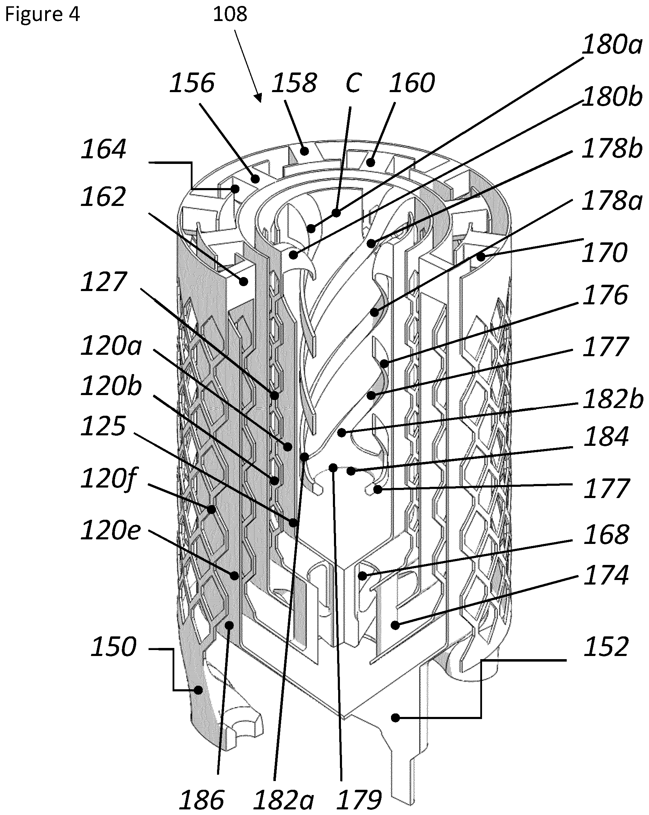

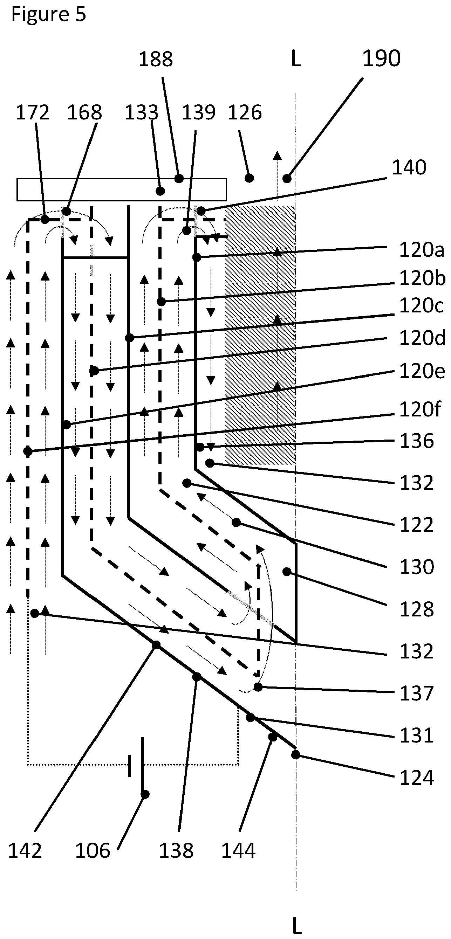

The structure of the resistive heater 108 in accordance with preferred embodiments of the present invention, which may be used in the arrangements of any of Figures 1 to 3, is now described with reference to Figures 4 and 5.

The resistive heater 108 comprises a plurality of annular walls 120 composed of an electrically conductive material. In this specification, the term "annular" means "generally ring-like", is not limited to geometrically circular shapes, and encompasses shapes that may be circular or other than circular, for example elliptical, polygonal, etc.. In the illustrated embodiment, the annular walls 120 have a circular cross-section. However, the annular walls may have any desired cross-sectional shape, which may be any polygonal shape, for example square, rectangular, triangular, hexagonal, etc., or may be a curved or rounded shape, for example circular, elliptical, etc..

The annular walls 120 are nested to define a plurality of annular flow channels 122 which are serially arranged concentrically about a longitudinal axis L-L. The annular walls 120 extend between opposite first and second ends 124, 126 of the resistive heater 108 which are mutually separated along the longitudinal axis L-L.

The plurality of annular walls 120 are mechanically connected together whereby adjacent flow channels 122 have opposite fluid flow directions and are connected at adjacent ends 128 of the respective channels 122 to define an alternating serpentine flow path 130 which has an input end 132 at the fluid input 112 and an output end 134 at the fluid output 113. The input and output ends 132, 134 are respectively located at radially outer and radially inner positions relative to the longitudinal axis L-L. The fluid input 112 and the fluid output 113 are respectively located at the first and second ends 124, 126 of the resistive heater 108. The alternating serpentine flow path 130 has first and second annular closed sides 131, 133 respectively located at the first and second ends 124, 126 of the resistive heater 108. At the closed sides 131, 133, turns 137, 139 are respectively provided connecting adjacent flow channels 122.

In the illustrated embodiment, the outermost wall 120f is cylindrical, and apart from the outermost wall 120f, each other wall 120a-120e inwardly thereof comprises a cylindrical portion 136 and an adjacent conical portion 138. A free end part 140 of the cylindrical portion 136 is located at the second end 126 of the resistive heater 108 and the conical portion 138 is oriented towards the first end 124 of the resistive heater 108. The conical portion 138 which is closest to the first end 124 of the resistive heater 108 comprises a solid layer 142 which defines a closed end part 144 of the plurality of annular walls 120.

Accordingly, one annular wall 120e, which is inwardly adjacent to outermost wall 120f, is configured to form the closed end part 144 of the plurality of annular walls 120 at the first end 124 of the resistive heater 108. The closed end part 144 closes the ends 128 of the annular flow channels 122 at the first end 124 of the resistive heater 108 to form directional changes in the alternating serpentine flow path 130 at the first end 124 of the resistive heater 108.

Each annular wall 120 is composed of either a solid layer of the electrically conductive material, schematically illustrated by a solid line in Figure 5, or a perforated layer of the electrically conductive material, schematically illustrated by a dashed line in Figure 5.

In the embodiment of Figures 4 and 5, the resistive heater 108 comprises alternating annular walls 120 composed of a solid or perforated layer of the electrically conductive material. The innermost wall 120a is composed of a solid layer 125 of the electrically conductive material, the adjacent wall 120b is composed of a perforated layer 127 of the electrically conductive material, the next wall 120c is composed of a solid layer 125 of the electrically conductive material, the next wall 120d is composed of a perforated layer 127 of the electrically conductive material, the next wall 120e is composed of a solid layer 125 of the electrically conductive material and the outermost wall 120f is composed of a perforated layer 127 of the electrically conductive material.

Accordingly, each annular wall 120a, 120c, 120e composed of the solid layer 125 of the electrically conductive material has adjacent thereto, on at least one or both of a radially outer and a radially inner side thereof, an annular wall 120b, 120d, 120f composed of the perforated layer 127 of the electrically conductive material, and each annular wall 120b, 120d, 120f composed of the perforated layer 127 of the electrically conductive material has adjacent thereto, on at least one or both of a radially outer and a radially inner side thereof, an annular wall 120a, 120c, 120e composed of the solid layer 125 of the electrically conductive material. The perforated layer 127 comprises a perforated mesh, but may comprise any other types of perforation.

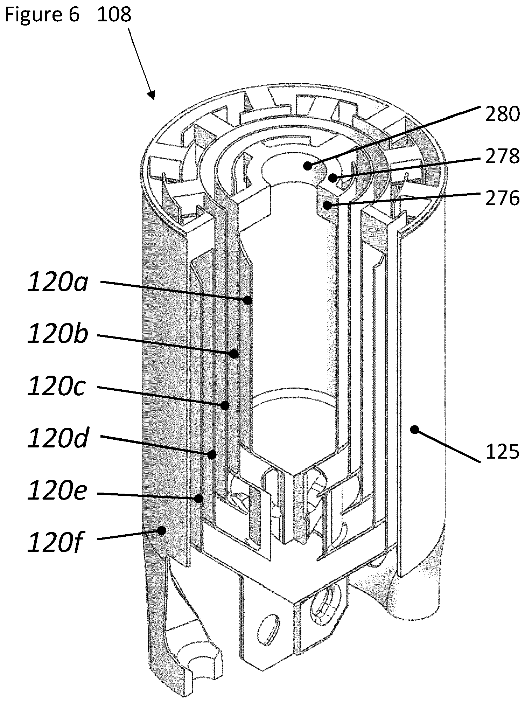

In an alternative embodiment as shown in Figure 6, each annular wall 120a-120f is composed of a solid layer 125 of the electrically conductive material.

The annular walls 120a-120f comprise *n* walls which are nested to form a series of the annular walls 120a-120f. The series has a radially innermost wall 120a having *n* = 1 and a radially outermost wall 120f having *n* = n. The series also has at least one radially intermediate wall 120b-120e between the radially innermost wall 120a and the radially outermost wall 120f. Each radially intermediate wall 120b-120e has a respective value of *n* between 1 and n.

First and second electrical terminals 150, 152 are provided for connection to the source of electrical energy 106 to heat the walls 120 of the resistive heater 108. The first and second electrical terminals 150, 152 are electrically connected to respective first and second walls 120f, 120e which are mutually adjacent and comprise an outer pair of the walls 120f, 120e which is located at a radially outer side of the resistive heater 108. Therefore, the electrical terminals 150, 152 are connected to the outermost wall 120f and the wall 120e inwardly adjacent thereto. In the preferred embodiment the walls 120 to which the terminals 150, 152 are connected comprise an outer pair of the walls 120f, 120e, although the terminals 150, 152 themselves do not need to be located at or towards a radially outer side of the resistive heater 108. The first terminal 150 may be located at or towards a radially outer side of the resistive heater 108, whereas the second terminal 152 may be located elsewhere at any suitable position separated from the first terminal 150, for example at a centre of the resistive heater 108 beneath the closed end part 144 of the walls 120. However, the terminals 150, 152 may be located at any desired position. As described above, the first and second electrical terminals 150, 152 are configured to be electrically connected to the source of electrical energy 106 by a wired connection.

The plurality of annular walls 120 are electrically connected together to define a continuous electrically conductive path 156 extending between the first and second electrical terminals 150, 152. The conductive path 156 has a first part 158 which extends from the first wall, i.e. the outermost wall 120f, to a centre C of the resistive heater 108 and a second part 160 which extends from the centre C of the resistive heater to the second wall, i.e. the wall 120e inwardly adjacent to the outermost wall 120f.

The annular walls 120a-120f are electrically connected together by first electrical connections 162 which electrically connect walls 120 having *n* as an even number to form the first part 158 of the conductive path 156 and by second electrical connections 164 which electrically connect walls120 having *n* as an odd number to form the second part 160 of the conductive path 156.

In the preferred embodiment, the first and second electrical connections 162, 164 are integral with the walls 120 which are electrically interconnected by the respective electrical connection 162, 164. Each of the first and second electrical connections 162, 164 is either parallel to, or orthogonal to, the longitudinal axis L-L. At least some walls 120 are provided with openings 168 extending therethrough and at least one of first and second electrical connections 162, 164 extends through a respective opening 168. The first and second electrical connections 162, 164 also provide mechanical connections 170 by which the walls 120 are mechanically connected together.

In the preferred embodiment, the first and second electrical connections 162, 164, which also provide the mechanical connections 170, which are orthogonal to the longitudinal axis L-L comprise radially oriented lateral struts 172, and a plurality of circumferentially spaced radially oriented lateral struts 172 are provided around the circumference of the walls 120 for interconnecting the walls 120 where *n* is even or *n is* odd. The struts 172 are provided towards both the first and second ends 124, 126 of the resistive heater 108. The struts 172 connect the annular walls 120 both electrically and mechanically, providing structural stiffness and an electrical current path.

In the preferred embodiment, the first and second electrical connections 162, 164, which also provide the mechanical connections 170, which are parallel to the longitudinal axis L-L comprise longitudinally oriented wall portions 174 and either a plurality of circumferentially spaced longitudinally oriented wall portions 174 are provided around the circumference of the walls 120 for interconnecting the walls 120 where *n* is even or *n* is odd, in order to provide the openings 168, or a single longitudinally oriented wall portion 174 is provided around the circumference of the walls 120 for interconnecting the walls 120 where n is even or *n* is odd, and one or more 168 is provided in the single longitudinally oriented wall portion 174.

The resistive heater 108 further comprises an electrical connector 176, composed of an electrically conductive material, located at the centre C of the resistive heater 108 which electrically connects together an inner pair of the annular walls 120a, 120b. The electrical connector 176 is shown in Figure 4, but for clarity of illustration is not shown in Figure 5, but instead is represented by a hatched area.

In the illustrated embodiment the electrical connector 176 is in the form of an inner coil 177 of the resistive heater 108. However, in alternative embodiments of the present invention any other shape and configuration of the electrical connector may be employed to electrically connect the inner pair of the annular walls 120a, 120b. For example, in the alternative embodiment as shown in Figure 6, the electrical connector 276 is in the form a ring member 278 of the electrically conductive material having a central orifice 280 through which the heated fluid flow is expelled.

In each embodiment, the electrical connector 176, 276 is preferably integral with the annular walls 120 of the resistive heater 108, and the resistive heater 108 is formed as an integral monolithic body, for example by an additive manufacturing process such as Selective Laser Melting (SLM).

The electrical connector 176 comprises a pair of elongate helical elements 178a, 178b which are arranged concentrically about the longitudinal axis L-L and are surrounded by the innermost wall 120a. A first end 180a, 180b of each helical element 178a, 178b is connected to a respective wall 120a, 120b of the inner pair of the walls 120a, 120b and opposite second ends 182a, 182b of the helical elements 178a, 178b are connected together by a connection member 184 of the electrical connector 176. The connection member 184 comprises an annular ring. The first ends 180a, 180b of the helical elements 178a, 178b are located at the second end 126 of the resistive heater 108.

Accordingly, the outermost annular wall 120f is connected to the helical element 178a of the inner coil 177 and the inwardly adjacent annular wall 120e is connected to the helical element 178b of the inner coil 177, and the helical elements 178a, 178b are connected at a bottom end 179 of the inner coil 177 by the connection member 184.

In the illustrated embodiment the solid annular walls 120a, 120c and 120e generate heat and create flow channels for the fluid. The struts 172 pass through the openings 168 provided in the annular walls 120, such that electric current passes from the electric terminal 150 through all perforated annular walls 120f, 120d and 120b in sequence, followed by the central heating coil 177, followed by all solid annular walls 120a, 120c and 120e in sequence to the electric terminal 152 (or vice versa). The terminal 150 comprises both an electric terminal (positive or negative) as well as the means of mechanically connecting the resistive heater 108 to the housing. The terminal 152 comprises an electric terminal (positive or negative) connected to an electric conductor passing through the wall of the housing 104, forming a pressure envelope boundary, and is sealed to the housing by an electrically insulating seal (not shown).

In the preferred embodiment of the present invention, the resistive heater 108 comprises an integral monolithic body 186. In other words, the annular walls 120, the first and second electrical connections 162, 164, the mechanical connections 170, the electrical connector 176 and the first and second electrical terminals 150, 152 are all comprised in the single integral monolithic body 186.

The integral monolithic body 186 may be fabricated via an additive manufacturing technique, optionally selected from Selective Laser Melting (SLM), Selective Laser Sintering (SLS), Direct Metal Laser Sintering (DMLS), Neutral Beam Melting (NBM), Electron Beam Welding (EBW), Laser Deposition Welding (LDW), Laser Beam Melting (LBM), Laser Metal Deposition (LMD), Electron Beam Melting (EBM), Direct Energy Deposition (DED), Rapid Prototyping (RP), and Rapid Manufacturing (RM). Preferably, the integral monolithic body 186 is fabricated by Selective Laser Melting (SLM), producing consecutive horizontal slices or layers starting from the second end 126 of the resistive heater 108 and progressively forming the resistive heater 108 to terminate at the first end 124 of the resistive heater 108.

The electric heating system 100 further comprises an annular closure member 188 which is located at the second end 126 of the resistive heater 108. The annular closure member 188 is shown highly schematically in Figure 5, but for clarity of illustration is not shown in Figure 4.

The annular closure member 188 is composed of an electrically insulating material, for example a ceramic material. The closure member 188 is typically an electrically insulating perforated disk, which comprises one or more holes 190 in correspondence with the fluid outlet 113, and which caps the second end 126 of the resistive heater 108 to close off a side of the alternating serpentine flow path 130. The closure member 188 closes ends of the annular flow channels 122 at the second end 126 of the resistive heater 108 to form directional changes in the alternating serpentine flow path 130 at the second end 126 of the resistive heater 108. The closure member 188 may be in contact with, or spaced e.g. a slight distance from, the resistive heater 108.

In some embodiments of the present invention, the housing 104 is not electrically connected to the resistive heater 108. However, in alternative embodiments of the present invention, the housing 104 may be electrically connected to one of the first and second electrical terminals 150, 152 of the resistive heater 108 whereby the respective electrical terminal 150, 152 is connectable to the source of electrical energy 106 via the housing 104. The respective electrical terminal 50, 52 may be integral with, or separate from, a mechanical connection (not shown) between the resistive heater 108 and the housing 104.

The present invention further provides a method of producing a high-temperature fluid flow. In the preferred embodiments of the present invention, the electric heating system 100 is a resistojet and installed in a spacecraft, and the method is for moving the spacecraft in space.

The method comprises providing an electric heating system 100 as described hereinabove. The fluid to be heated is supplied to the fluid input 112 of the resistive heater 108 and thereby to flow along the serpentine flow path 130 to the fluid output 113 of the resistive heater 108. The supplied fluid has a pressure greater than an external gas pressure surrounding an exterior 192 (see Figure 1) of the housing 104.

An electrical potential is applied across the first and second terminals 150, 152 to heat the fluid flow in the alternating serpentine flow path 130 by the resistive heater 108. The fluid flows from the bottom and circulates in series through the flow channels 122 via the upper turns 139 and the lower turns 137, finally reaching the inner coil 177 and the outflow. Then, the heated fluid flow is expelled from the outlet 112 of the housing 104. In the embodiment of Figure 2 the heated fluid is expelled from the outlet of the housing at a subsonic or sonic velocity via a converging diffuser. In the embodiment of Figure 3 the heated fluid is expelled from the outlet of the housing at a supersonic or hypersonic velocity via a converging-diverging nozzle.

The solid annular walls 120 define the flow channels 122 therebetween. The perforated annular walls 120, typically in the form of a perforated mesh, have an increased electrical resistance and an increased surface area as compared to a solid annular wall of the same dimensions. Consequently, the provision of alternating perforated annular walls 120 adjacent to the solid annular walls 120, and in particular within the flow channels 122, can achieve enhanced thermal transfer into the fluid for a given electrical current.

Furthermore, in the illustrated embodiments the solid annular walls 120 have smooth inner and outer cylindrical surfaces. However, alternatively either or both of the inner and outer cylindrical surfaces may be provided with a relief surface, which may increase the surface area and may achieve enhanced heat transfer. Such surface features can readily be achieved using additive manufacturing processes, such as Selective Laser Melting (SLM). The annular walls 120 may also vary in thickness and cross-sectional shape and dimensions.

The primary application of the electrical heater system of the preferred embodiments of the present invention is for high-temperature resistojets for space applications. Such high-temperature resistojets can be employed in small to large platforms, where the resistojet can be employed as a thruster to provide primary or secondary propulsion respectively.

The electrical heater system of the preferred embodiments of the present invention can provide a greater propellant usage efficiency (specific impulse - Iₛₚ) as compared to any other current resistojet. Consequently, electrical heater system of the preferred embodiments of the present invention can provide a highly cost-effective propulsion system for small satellites, including constellations.

The resistive heater in the electrical heater system of the preferred embodiments of the present invention can convert electrical energy to thermal energy, which is transferred to a fluid, with extreme efficiency. The resistive heater both releases energy directly to the flow and forms a recirculating path, which results in the highest temperature being generated in the centre of the resistive heater, achieving a thermal efficiency up to 95%. When the resistive heater is composed of a refractory metal, the resistive heater can heat a fluid to a temperatures as high as 3,500 K, without relying on combustion or any other chemical reaction. Moreover, the resistive heater in the electrical heater system of the preferred embodiments of the present invention can be fabricated by an additive manufacturing process, for example Selective Laser Melting (SLM), to provide an integral monolithic resistive heater. This additive manufacturing process not only can be used as a single manufacturing process, which reduces cost and complexity during manufacturing, but also can provide a resistive heater which has high in-service reliability since thermal expansion stresses can be minimized or eliminated. This additive manufacturing process can also produce a compact, low cost of the monolithic resistive heater.

In addition, the electrical terminals can be located at, or connected to, an exterior of the resistive heater and connected to a radially outermost pair of annular walls of the resistive heater, which can provide that the outermost annular walls of the resistive heater remain cool and a thermal gradient of increasing temperature generally extends from an outer circumferential periphery of the resistive heater toward a centre of the resistive heater. Such a thermal gradient of increasing temperature also generally extends from an input to the output of fluid flow through the resistive heater. This increases thermal efficiency and enables high exit temperatures for the fluid to be achieved.

In the satellite industry, the electrical heater system of the preferred embodiments of the present invention can be used to replace chemical propulsion systems that use hazardous propellants, which can significantly reduce the costs in satellite assembly integration and testing activities, and can simplify the design of the spacecraft.

In addition, the electrical heater system of the preferred embodiments of the present invention can be used in a variety of other hot-flow applications, other than for satellite propulsion. For example, the present invention may be of use for: as an electric generator of superheated steam for antimicrobial disinfection on biofilms and hard surfaces; food processing; epoxy resin curing; and stripping or cleaning purposes in refining and hydrocarbon industries; as an electric replacement for a gas torch for local heat-treatment; high-precision glass and jewellery working; pre-heating of equipment in the metal cast houses; and start-up heating of solid oxide fuel cells; the ignition of combustion engines; an electric heating source for hot gas welding of plastics and most metal alloys; a generator of highly energetic non-ionised flows in hypersonic wind tunnels, to test flight characteristics of aircraft, launchers and satellite re-entry; and a heat gun of enhanced temperature range, above a typical 600°C airflow temperature, for wire harness, soldering and de-soldering of circuit boards for electronics devices.

Various improvements and modifications to the preferred embodiments of the present invention will be apparent to those skilled in the art, and these are encompassed by the present invention as defined in the appended claims.

## Claims

1. An electric heating system (100) for heating a fluid flow, the system comprising:
a housing (104; 204; 304) having an inlet (110; 210); 310 for a fluid flow to be heated by the electric heating system (100) and an outlet (111; 211; 311) for the fluid flow which has been heated by the electric heating system (100); and
a resistive heater (108) mounted within the housing (104; 204; 304), the resistive heater (108) comprising:
a fluid input (112) and a fluid output (113) which are fluidically coupled, respectively, to the inlet (110; 210; 310) and the outlet (111; 211; 311),
a plurality of annular walls (120) composed of an electrically conductive material, the walls (120) being nested to define a plurality of annular flow channels (122) which are serially arranged concentrically about a longitudinal axis (L-L), wherein the walls (120) extend between opposite first and second ends (124, 126) of the resistive heater (108) which are mutually separated along the longitudinal axis (L-L), and
first and second electrical terminals (150, 152) for connection to a source of electrical energy to heat the walls (120) of the resistive heater (108), the first and second electrical terminals (150, 152) being electrically connected to respective first and second walls (120f, 120e),
wherein the plurality of annular walls (120) are mechanically connected together whereby adjacent flow channels (122) have opposite fluid flow directions and are connected at adjacent ends (128) of the respective channels (122) to define an alternating serpentine flow path (130) which has an input end (132) at the fluid input (112) and an output end (134) at the fluid output (113), wherein the input and output ends (132, 134) are respectively located at radially outer and radially inner positions relative to the longitudinal axis (L-L), and
wherein the plurality of annular walls (120) are electrically connected together to define a continuous electrically conductive path (156) extending between the first and second electrical terminals (150, 152),
**characterised in that** the first and second walls (120f, 120e) are mutually adjacent and comprise an outer pair of the walls (120) which are located at a radially outer side of the resistive heater (108), and the conductive path (156) has a first part (158) which extends from the first wall (120f) to a centre (C) of the resistive heater (108) and a second part (160) which extends from the centre (C) of the resistive heater (108) to the second wall (120e).

2. The system according to claim 1, wherein the fluid input (112) and the fluid output (113) are respectively located at the first and second ends (124, 126) of the resistive heater (108).

3. The system according to claim 1 or claim 2, wherein (A) each annular wall (120) is composed of either a solid layer (125) of the electrically conductive material or a perforated layer (127) of the electrically conductive material, optionally wherein the resistive heater (108) comprises alternating annular walls (120) composed of a solid or perforated layer (125, 127) of the electrically conductive material, wherein each annular wall (120a, 120c, 120e) composed of the solid layer (125) of the electrically conductive material has adjacent thereto, on at least one or both of a radially outer and a radially inner side thereof, an annular wall (120b, 120d, 120f) composed of the perforated layer (127) of the electrically conductive material, and each annular wall (120b, 120d, 120f) composed of the perforated layer (127) of the electrically conductive material has adjacent thereto, on at least one or both of a radially outer and a radially inner side thereof, an annular wall (120a, 120c, 120e) composed of the solid layer (125) of the electrically conductive material; or (B) each annular wall (120) is composed of a solid layer (125) of the electrically conductive material.

4. The system according to any one of claims 1 to 3, wherein the walls (120) comprise n walls (120) which are nested to form a series of the walls (120), the series having a radially innermost wall (120a) having *n =* 1, a radially outermost wall (120f) having *n = n,* and at least one radially intermediate wall (120b-120e) therebetween, each having a respective value of *n* between 1 and n, wherein the walls (120) are electrically connected together by first electrical connections (162) which electrically connect walls (120) having n as an even number to form the first part (158) of the conductive path (156) and by second electrical connections (164) which electrically connect walls (120) having n as an odd number to form the second part (160) of the conductive path (156), optionally wherein the first and second electrical connections (162, 164) are integral with the walls (120) which are electrically interconnected by the respective electrical connection (162, 164), further optionally wherein each of the first and second electrical connections (162, 164) is either parallel to, or orthogonal to, the longitudinal axis (L-L).

5. The system according to claim 4, wherein (i) at least some walls (120) are provided with openings (168) extending therethrough and at least one of first and second electrical connections (162, 164) extends through a respective opening (168), and/or (ii) the first and second electrical connections (162, 164) also provide mechanical connections (170) by which the walls (120) are mechanically connected together.

6. The system according to any one of claims 1 to 5, wherein at least one of the walls (120) comprises a cylindrical portion (136) and an adjacent conical portion (138), wherein a free end part (140) of the cylindrical portion (136) is located at the second end (126) of the resistive heater (108) and the conical portion (138) is oriented towards the first end (124) of the resistive heater (108), optionally wherein the conical portion (138) which is closest to the first end (124) of the resistive heater (108) comprises a solid layer (142) which defines a closed end part (144) of the plurality of annular walls (120).

7. The system according to any one of claims 1 to 6, wherein the electric heating system (100) further comprises an annular closure member (188), which is composed of an electrically insulating material, located at the second end (126) of the resistive heater (108), wherein the closure member (188) closes ends of the annular flow channels (122) at the second end (126) of the resistive heater (108) to form directional changes in the alternating serpentine flow path (130) at the second end (126) of the resistive heater (108), optionally wherein the at least one electrically insulating closure member (188) is in contact with, or spaced from, the resistive heater (108).

8. The system according to any one of claims 1 to 7, wherein one annular wall (120e) is configured to form a closed end part (144) of the plurality of annular walls (120) at the first end (124) of the resistive heater (108), wherein the closed end part (144) closes ends (128) of the annular flow channels (122) at the first end (124) of the resistive heater (108) to form directional changes in the alternating serpentine flow path (130) at the first end (124) of the resistive heater (108).

9. The system according to any one of claims 1 to 8, wherein the resistive heater (108) further comprises an electrical connector (176), composed of an electrically conductive material, located at the centre (C) of the resistive heater (108) which electrically connects together an inner pair of the annular walls (120a, 120b), optionally wherein the electrical connector (176) comprises a pair of elongate helical elements (178a, 178b) which are arranged concentrically about the longitudinal axis (L-L) and are surrounded by the innermost wall (120a), wherein a first end (180a, 180b) of each helical element (178a, 178b) is connected to a respective wall (120a, 120b) of the inner pair of the walls (120a, 120b) and opposite second ends (182a, 192b) of the helical elements (178a, 178b) are connected together by a connection member (184) of the electrical connector (176), further optionally wherein (i) the connection member (184) comprises an annular ring and/or (ii) the first ends (180a, 180b) of the helical elements (178a, 178b) are located at the second end (126) of the resistive heater (108).

10. The system according to any one of claims 1 to 9, wherein the resistive heater (108) comprises an integral monolithic body (186), optionally wherein the integral monolithic body (186) is fabricated via an additive manufacturing technique, optionally selected from Selective Laser Melting (SLM), Selective Laser Sintering (SLS), Direct Metal Laser Sintering (DMLS), Neutral Beam Melting (NBM), Electron Beam Welding (EBW), Laser Deposition Welding (LDW), Laser Beam Melting (LBM), Laser Metal Deposition (LMD), Electron Beam Melting (EBM), Direct Energy Deposition (DED), Rapid Prototyping (RP), or Rapid Manufacturing (RM).

11. The system according to any one of claims 1 to 10, wherein (A) the housing (104) is electrically connected to one of the first and second electrical terminals (150, 152) of the resistive heater (108) whereby the respective electrical terminal (150, 152) is connectable to the source of electrical energy (106) via the housing (104), optionally wherein the respective electrical terminal (150, 152) is integral with, or separate from, a mechanical connection between the resistive heater (108) and the housing (104); and/or (B) the first and second electrical terminals (150, 152) are configured to be electrically connected by a wired connection to the source of electrical energy (106), and the system further comprises a source of electrical energy (106) which is connected to the first and second electrical terminals (150, 152), wherein the source of electrical energy (106) is configured to supply a direct current, or an alternating current.

12. The system according to any one of claims 1 to 11, wherein a plurality of the resistive heaters (108) are located within the housing (104), and the resistive heaters (108) are arranged in series or in parallel relative to the inlet (110; 210; 310) and outlet (111; 211; 311) for fluid flow.

13. The system according to any one of claims 1 to 12, wherein the electric heating system (100) is a resistojet and is configured for installation into a spacecraft, for use in moving the spacecraft in space.

14. A method of producing a high-temperature fluid flow, the method comprising the steps of:
a) providing an electric heating system (100) according to any one of claims 1 to 13;
b) supplying a fluid to be heated to the fluid input (112) of the resistive heater (108) and thereby to flow along the alternating serpentine flow path (130) to the fluid output (113) of the resistive heater (108), the supplied fluid having a pressure greater than an external gas pressure surrounding an exterior (192) of the housing (104);
c) applying an electrical potential across the first and second terminals (150, 152) to heat the fluid flow in the alternating serpentine flow path (130) by the resistive heater (108); and
d) expelling the heated fluid flow from the outlet (111; 211; 311) of the housing (104).

15. The method of claim 14, wherein (i) the heated fluid is expelled from the outlet (111; 211; 311) of the housing (104) at a subsonic or sonic velocity via a converging nozzle, or (ii) the heated fluid is expelled from the outlet (111; 211; 311) of the housing (104) at a supersonic or hypersonic velocity via a converging-diverging nozzle.

## Patentansprüche

1. Ein elektrisches Heizsystem (100) zum Erhitzen eines Fluidstroms, wobei das System umfasst:
ein Gehäuse (104; 204; 304) mit einem Einlass (110; 210; 310) für einen Fluidstrom, der durch das elektrische Heizsystem (100) erhitzt werden soll, und einem Auslass (111; 211; 311) für den Fluidstrom, der durch das elektrische Heizsystem (100) erhitzt wurde; und
einen Widerstandsheizer (108), der innerhalb des Gehäuses (104; 204; 304) montiert ist, wobei der Widerstandsheizer (108) umfasst:
einen Fluideinlass (112) und einen Fluidauslass (113), die jeweils fluidisch mit dem Einlass (110; 210; 310) und dem Auslass (111; 211; 311) gekoppelt sind,
eine Vielzahl von ringförmigen Wänden (120), die aus einem elektrisch leitfähigen Material bestehen, wobei die Wände (120) ineinander verschachtelt sind, um eine Vielzahl von ringförmigen Strömungskanälen (122) zu definieren, die seriell konzentrisch um eine Längsachse (L-L) angeordnet sind, wobei die Wände (120) sich zwischen gegenüberliegenden ersten und zweiten Enden (124, 126) des Widerstandsheizers (108) erstrecken, die entlang der Längsachse (L-L) voneinander getrennt sind, und
erste und zweite elektrische Anschlüsse (150, 152) zum Anschluss an eine Quelle elektrischer Energie, um die Wände (120) des Widerstandsheizers (108) zu erhitzen, wobei die ersten und zweiten elektrischen Anschlüsse (150, 152) elektrisch mit den jeweiligen ersten und zweiten Wänden (120f, 120e) verbunden sind,
wobei die Vielzahl von ringförmigen Wänden (120) mechanisch miteinander verbunden sind, sodass benachbarte Strömungskanäle (122) entgegengesetzte Fluidströmungsrichtungen haben und an benachbarten Enden (128) der jeweiligen Kanäle (122) verbunden sind, um einen alternierenden serpentinenförmigen Strömungspfad (130) zu definieren, der ein Eingangsende (132) am Fluideinlass (112) und ein Ausgangsende (134) am Fluidauslass (113) hat, wobei die Eingangs- und Ausgangsenden (132, 134) jeweils an radial äußeren und radial inneren Positionen relativ zur Längsachse (L-L) angeordnet sind, und
wobei die Vielzahl von ringförmigen Wänden (120) elektrisch miteinander verbunden sind, um einen kontinuierlichen elektrisch leitfähigen Pfad (156) zu definieren, der sich zwischen den ersten und zweiten elektrischen Anschlüssen (150, 152) erstreckt,
**dadurch gekennzeichnet, dass** die ersten und zweiten Wände (120f, 120e) benachbart sind und ein äußeres Paar der Wände (120) umfassen, die sich an einer radial äußeren Seite des Widerstandsheizers (108) befinden, und der leitfähige Pfad (156) einen ersten Teil (158) hat, der sich von der ersten Wand (120f) zu einem Zentrum (C) des Widerstandsheizers (108) erstreckt, und einen zweiten Teil (160), der sich vom Zentrum (C) des Widerstandsheizers (108) zur zweiten Wand (120e) erstreckt.

2. Das System nach Anspruch 1, wobei der Fluideinlass (112) und der Fluidauslass (113) jeweils an den ersten und zweiten Enden (124, 126) des Widerstandsheizers (108) angeordnet sind.

3. Das System nach Anspruch 1 oder Anspruch 2, wobei (A) jede ringförmige Wand (120) entweder aus einer festen Schicht (125) des elektrisch leitfähigen Materials oder einer perforierten Schicht (127) des elektrisch leitfähigen Materials besteht, optional wobei der Widerstandsheizer (108) abwechselnde ringförmige Wände (120) umfasst, die aus einer festen oder perforierten Schicht (125, 127) des elektrisch leitfähigen Materials bestehen, wobei jede ringförmige Wand (120a, 120c, 120e), die aus der festen Schicht (125) des elektrisch leitfähigen Materials besteht, benachbart dazu, auf mindestens einer oder beiden radial äußeren und radial inneren Seiten davon, eine ringförmige Wand (120b, 120d, 120f) hat, die aus der perforierten Schicht (127) des elektrisch leitfähigen Materials besteht, und jede ringförmige Wand (120b, 120d, 120f), die aus der perforierten Schicht (127) des elektrisch leitfähigen Materials besteht, benachbart dazu, auf mindestens einer oder beiden radial äußeren und radial inneren Seiten davon, eine ringförmige Wand (120a, 120c, 120e) hat, die aus der festen Schicht (125) des elektrisch leitfähigen Materials besteht; oder (B) jede ringförmige Wand (120) besteht aus einer festen Schicht (125) des elektrisch leitfähigen Materials.

4. Das System nach einem der Ansprüche 1 bis 3, wobei die Wände (120) n Wände (120) umfassen, die ineinander verschachtelt sind, um eine Serie der Wände (120) zu bilden, wobei die Serie eine radial innerste Wand (120a) hat, wobei n = 1, eine radial äußerste Wand (120f) hat, wobei n = n, und mindestens eine radial mittlere Wand (120b-120e) dazwischen, wobei jede eine jeweilige Wert von n zwischen 1 und n hat, wobei die Wände (120) elektrisch miteinander verbunden sind durch erste elektrische Verbindungen (162), die Wände (120) elektrisch verbinden, die n als gerade Zahl haben, um den ersten Teil (158) des leitfähigen Pfads (156) zu bilden, und durch zweite elektrische Verbindungen (164), die Wände (120) elektrisch verbinden, die n als ungerade Zahl haben, um den zweiten Teil (160) des leitfähigen Pfads (156) zu bilden, optional wobei die ersten und zweiten elektrischen Verbindungen (162, 164) integral mit den Wänden (120) sind, die durch die jeweilige elektrische Verbindung (162, 164) elektrisch miteinander verbunden sind, weiter optional wobei jede der ersten und zweiten elektrischen Verbindungen (162, 164) entweder parallel oder orthogonal zur Längsachse (L-L) ist.

5. Das System nach Anspruch 4, wobei (i) mindestens einige Wände (120) mit Öffnungen (168) versehen sind, die sich durch diese erstrecken, und mindestens eine der ersten und zweiten elektrischen Verbindungen (162, 164) sich durch eine jeweilige Öffnung (168) erstreckt, und/oder (ii) die ersten und zweiten elektrischen Verbindungen (162, 164) auch mechanische Verbindungen (170) bereitstellen, durch die die Wände (120) mechanisch miteinander verbunden sind.

6. Das System nach einem der Ansprüche 1 bis 5, wobei mindestens eine der Wände (120) einen zylindrischen Abschnitt (136) und einen angrenzenden konischen Abschnitt (138) umfasst, wobei ein freies Endteil (140) des zylindrischen Abschnitts (136) am zweiten Ende (126) des Widerstandsheizers (108) angeordnet ist und der konische Abschnitt (138) zum ersten Ende (124) des Widerstandsheizers (108) ausgerichtet ist, optional wobei der konische Abschnitt (138), der dem ersten Ende (124) des Widerstandsheizers (108) am nächsten ist, eine feste Schicht (142) umfasst, die ein geschlossenes Endteil (144) der Vielzahl von ringförmigen Wänden (120) definiert.

7. Das System nach einem der Ansprüche 1 bis 6, wobei das elektrische Heizsystem (100) weiter ein ringförmiges Verschlusselement (188) umfasst, das aus einem elektrisch isolierenden Material besteht und am zweiten Ende (126) des Widerstandsheizers (108) angeordnet ist, wobei das Verschlusselement (188) die Enden der ringförmigen Strömungskanäle (122) am zweiten Ende (126) des Widerstandsheizers (108) verschließt, um Richtungsänderungen im alternierenden serpentinenförmigen Strömungspfad (130) am zweiten Ende (126) des Widerstandsheizers (108) zu bilden, optional wobei das mindestens eine elektrisch isolierende Verschlusselement (188) in Kontakt mit oder entfernt vom Widerstandsheizer (108) ist.

8. Das System nach einem der Ansprüche 1 bis 7, wobei eine ringförmige Wand (120e) konfiguriert ist, um ein geschlossenes Endteil (144) der Vielzahl von ringförmigen Wänden (120) am ersten Ende (124) des Widerstandsheizers (108) zu bilden, wobei das geschlossene Endteil (144) die Enden (128) der ringförmigen Strömungskanäle (122) am ersten Ende (124) des Widerstandsheizers (108) verschließt, um Richtungsänderungen im alternierenden serpentinenförmigen Strömungspfad (130) am ersten Ende (124) des Widerstandsheizers (108) zu bilden.

9. Das System nach einem der Ansprüche 1 bis 8, wobei der Widerstandsheizer (108) weiter einen elektrischen Verbinder (176) umfasst, der aus einem elektrisch leitfähigen Material besteht und am Zentrum (C) des Widerstandsheizers (108) angeordnet ist, der ein inneres Paar der ringförmigen Wände (120a, 120b) elektrisch miteinander verbindet, optional wobei der elektrische Verbinder (176) ein Paar von länglichen spiralförmigen Elementen (178a, 178b) umfasst, die konzentrisch um die Längsachse (L-L) angeordnet sind und von der innersten Wand (120a) umgeben sind, wobei ein erstes Ende (180a, 180b) jedes spiralförmigen Elements (178a, 178b) mit einer jeweiligen Wand (120a, 120b) des inneren Paares der Wände (120a, 120b) verbunden ist und gegenüberliegende zweite Enden (182a, 192b) der spiralförmigen Elemente (178a, 178b) durch ein Verbindungselement (184) des elektrischen Verbinders (176) miteinander verbunden sind, weiter optional wobei (i) das Verbindungselement (184) einen ringförmigen Ring umfasst und/oder (ii) die ersten Enden (180a, 180b) der spiralförmigen Elemente (178a, 178b) am zweiten Ende (126) des Widerstandsheizers (108) angeordnet sind.

10. Das System nach einem der Ansprüche 1 bis 9, wobei der Widerstandsheizer (108) einen integralen monolithischen Körper (186) umfasst, optional wobei der integrale monolithische Körper (186) durch eine additive Fertigungstechnik hergestellt wird, optional ausgewählt aus Selektivem Laserschmelzen (SLM), Selektivem Lasersintern (SLS), Direktmetall-Lasersintern (DMLS), Neutralstrahlschmelzen (NBM), Elektronenstrahlschweißen (EBW), Laserdepositionsschweißen (LDW), Laserstrahlschmelzen (LBM), Lasermetallabscheidung (LMD), Elektronenstrahlschmelzen (EBM), Direkter Energieabscheidung (DED), Rapid Prototyping (RP) oder Rapid Manufacturing (RM).

11. Das System nach einem der Ansprüche 1 bis 10, wobei (A) das Gehäuse (104) elektrisch mit einem der ersten und zweiten elektrischen Anschlüsse (150, 152) des Widerstandsheizers (108) verbunden ist, wodurch der jeweilige elektrische Anschluss (150, 152) über das Gehäuse (104) mit der Quelle elektrischer Energie (106) verbunden werden kann, optional wobei der jeweilige elektrische Anschluss (150, 152) integral mit oder getrennt von einer mechanischen Verbindung zwischen dem Widerstandsheizer (108) und dem Gehäuse (104) ist; und/oder (B) die ersten und zweiten elektrischen Anschlüsse (150, 152) konfiguriert sind, um durch eine kabelgebundene Verbindung mit der Quelle elektrischer Energie (106) verbunden zu werden, und das System weiter eine Quelle elektrischer Energie (106) umfasst, die mit den ersten und zweiten elektrischen Anschlüssen (150, 152) verbunden ist, wobei die Quelle elektrischer Energie (106) konfiguriert ist, Gleichstrom oder Wechselstrom zu liefern.

12. Das System nach einem der Ansprüche 1 bis 11, wobei eine Vielzahl der Widerstandsheizer (108) innerhalb des Gehäuses (104) angeordnet sind und die Widerstandsheizer (108) relativ zum Einlass (110; 210; 310) und Auslass (111; 211; 311) für den Fluidstrom in Serie oder parallel angeordnet sind.

13. Das System nach einem der Ansprüche 1 bis 12, wobei das elektrische Heizsystem (100) ein Resistojet ist und für die Installation in ein Raumfahrzeug konfiguriert ist, um das Raumfahrzeug im Weltraum zu bewegen.

14. Ein Verfahren zur Erzeugung eines Hochtemperatur-Fluidstroms, wobei das Verfahren die folgenden Schritte umfasst:
a) Bereitstellen eines elektrischen Heizsystems (100) gemäß einem der Ansprüche 1 bis 13;
b) Zuführen eines zu erhitzenden Fluids zum Fluideinlass (112) des Widerstandsheizers (108) und dadurch entlang des alternierenden serpentinenförmigen Strömungspfads (130) zum Fluidauslass (113) des Widerstandsheizers (108) strömen lassen, wobei das zugeführte Fluid einen höheren Druck als der äußere Gasdruck um das Äußere (192) des Gehäuses (104) hat;
c) Anlegen eines elektrischen Potentials an die ersten und zweiten Anschlüsse (150, 152), um den Fluidstrom im alternierenden serpentinenförmigen Strömungspfad (130) durch den Widerstandsheizer (108) zu erhitzen; und
d) Ausstoßen des erhitzten Fluidstroms aus dem Auslass (111; 211; 311) des Gehäuses (104).

15. Das Verfahren nach Anspruch 14, wobei (i) das erhitzte Fluid aus dem Auslass (111; 211; 311) des Gehäuses (104) mit einer Unterschall- oder Schallgeschwindigkeit über eine konvergierende Düse ausgestoßen wird, oder (ii) das erhitzte Fluid aus dem Auslass (111; 211; 311) des Gehäuses (104) mit einer Überschall- oder Hyperschallgeschwindigkeit über eine konvergierende-divergierende Düse ausgestoßen wird.

## Revendications

1. Système de chauffage électrique (100) destiné à chauffer un écoulement de fluide, le système comprenant :
un boîtier (104 ; 204 ; 304) ayant une entrée (110 ; 210 ; 310) pour qu'un écoulement de fluide soit chauffé par le système de chauffage électrique (100), et une sortie (111 ; 211 ; 311) destiné à l'écoulement de fluide qui a été chauffé par le système de chauffage électrique (100) ; et
un dispositif de chauffage résistif (108) monté à l'intérieur du boîtier (104 ; 204 ; 304), le dispositif de chauffage résistif (108) comprenant :
une entrée de fluide (112) et une sortie de fluide (113), lesquelles sont couplées de manière fluidique respectivement à l'entrée (110 ; 210 ; 310) et à la sortie (111 ; 211 ; 311) ;
une pluralité de parois annulaires (120) composées d'un matériau électriquement conducteur, les parois (120) étant imbriquées pour définir une pluralité de canaux d'écoulement annulaires (122) qui sont disposés en série de manière concentrique autour d'un axe longitudinal (L-L), dans lequel les parois (120) s'étendent entre des première et deuxième extrémités opposées (124, 126) du dispositif de chauffage résistif (108) qui sont mutuellement séparées le long de l'axe longitudinal (L-L) ; et
des première et deuxième bornes électriques (150, 152) destinées à une connexion à une source d'énergie électrique afin de chauffer les parois (120) du dispositif de chauffage résistif (108), les première et deuxième bornes électriques (150, 152) étant connectées électriquement à de respectives première et deuxième parois (120f, 120e),
dans lequel la pluralité de parois annulaires (120) sont connectées mécaniquement ensemble, moyennant quoi des canaux d'écoulement adjacents (122) ont des directions d'écoulement de fluide opposées et sont connectés à des extrémités adjacentes (128) des canaux respectifs (122) afin de définir un trajet d'écoulement sinueux alterné (130) qui dispose d'une extrémité d'entrée (132) au niveau de l'entrée de fluide (112) et d'une extrémité de sortie (134) au niveau de la sortie de fluide (113), dans lequel les extrémités d'entrée et de sortie (132, 134) sont respectivement situées à des positions radialement extérieure et radialement intérieure par rapport à l'axe longitudinal (L-L), et
dans lequel la pluralité de parois annulaires (120) sont connectées électriquement ensemble afin de définir un trajet continu électriquement conducteur (156) qui s'étend entre les première et deuxième bornes électriques (150, 152),
**caractérisé en ce que** les première et deuxième parois (120f, 120e) sont mutuellement adjacentes et comprennent une paire extérieure de ces parois (120) qui sont situées sur un côté radialement extérieur du dispositif de chauffage résistif (108), et le trajet conducteur (156) dispose d'une première partie (158) qui s'étend depuis la première paroi (120f) jusqu'à un centre (C) du dispositif de chauffage résistif (108) et d'une deuxième partie (160) qui s'étend depuis le centre (C) du dispositif de chauffage résistif (108) jusqu'à la deuxième paroi (120e).

2. Système selon la revendication 1, dans lequel l'entrée de fluide (112) et la sortie de fluide (113) sont respectivement situées au niveau des première et deuxième extrémités (124, 126) du dispositif de chauffage résistif (108).

3. Système selon la revendication 1 ou 2, dans lequel : (A) chaque paroi annulaire (120) est composée soit d'une couche pleine (125) du matériau électriquement conducteur, soit d'une couche perforée (127) du matériau électriquement conducteur, éventuellement dans lequel le dispositif de chauffage résistif (108) comprend des parois annulaires alternées (120) composées d'une couche pleine ou perforée (125, 127) du matériau électriquement conducteur, dans lequel chaque paroi annulaire (120a, 120c, 120e) composée de la couche pleine (125) du matériau électriquement conducteur dispose, adjacente à elle, sur au moins l'un ou sur les deux de ses côtés radialement extérieur et radialement intérieur, d'une paroi annulaire (120b, 120d, 120f) composée de la couche perforée (127) du matériau électriquement conducteur, et chaque paroi annulaire (120b, 120d, 120f) composée de la couche perforée (127) du matériau électriquement conducteur dispose, adjacente à elle, sur au moins l'un ou sur les deux de ses côtés radialement extérieur et radialement intérieur, d'une paroi annulaire (120a, 120c, 120e) composée de la couche pleine (125) du matériau électriquement conducteur ; ou (B) chaque paroi annulaire (120) est composée d'une couche pleine (125) du matériau électriquement conducteur.

4. Système selon l'une quelconque des revendications 1 à 3, dans lequel les parois (120) comprennent n parois (120) qui sont imbriquées pour former une série de ces parois (120), la série disposant d'une paroi radialement la plus intérieure (120a) ayant *n* = 1, une paroi radialement la plus extérieure (120f) ayant *n* = n, et au moins une paroi radialement intermédiaire (120b-120e) entre elles, chacune ayant une valeur respective de *n* comprise entre 1 et n, dans lequel les parois (120) sont connectées électriquement ensemble par des premières connexions électriques (162) qui connectent électriquement des parois (120) ayant n comme nombre pair pour former la première partie (158) du trajet conducteur (156), et par des deuxièmes connexions électriques (164) qui connectent électriquement des parois (120) ayant n comme nombre impair pour former la deuxième partie (160) du trajet conducteur (156), éventuellement dans lequel les première et deuxième connexions électriques (162, 164) sont solidaires des parois (120) qui sont électriquement interconnectées par la connexion électrique respective (162, 164), en outre éventuellement dans lequel chacune des première et deuxième connexions électriques (162, 164) est soit parallèle, soit orthogonale, à l'axe longitudinal (L-L).

5. Système selon la revendication 4, dans lequel : (i) au moins certaines parois (120) sont pourvues d'ouvertures (168) qui s'étendent à travers elles et au moins l'une des première et deuxième connexions électriques (162, 164) s'étend à travers une ouverture respective (168) ; et/ou (ii) les première et deuxième connexions électriques (162, 164) fournissent également des connexions mécaniques (170) par lesquelles les parois (120) sont mécaniquement connectées ensemble.

6. Système selon l'une quelconque des revendications 1 à 5, dans lequel au moins l'une des parois (120) comprend une portion cylindrique (136) et une portion conique adjacente (138), dans lequel une partie d'extrémité libre (140) de la portion cylindrique (136) est située au niveau de la deuxième extrémité (126) du dispositif de chauffage résistif (108) et la portion conique (138) est orientée vers la première extrémité (124) du dispositif de chauffage résistif (108), éventuellement dans lequel la portion conique (138) qui est la plus proche de la première extrémité (124) du dispositif de chauffage résistif (108) comprend une couche pleine (142) qui définit une partie d'extrémité fermée (144) de la pluralité de parois annulaires (120).

7. Système selon l'une quelconque des revendications 1 à 6, dans lequel le système de chauffage électrique (100) comprend en outre un élément de fermeture annulaire (188), qui est composé d'un matériau électriquement isolant, situé au niveau de la deuxième extrémité (126) du dispositif de chauffage résistif (108), dans lequel l'élément de fermeture (188) ferme des extrémités des canaux d'écoulement annulaires (122) au niveau de la deuxième extrémité (126) du dispositif de chauffage résistif (108) afin de former des changements de direction dans le trajet d'écoulement sinueux alterné (130) au niveau de la deuxième extrémité (126) du dispositif de chauffage résistif (108), éventuellement dans lequel ledit au moins un élément de fermeture électriquement isolant (188) est en contact avec le dispositif de chauffage résistif (108) ou espacé de celui-ci.

8. Système selon l'une quelconque des revendications 1 à 7, dans lequel une paroi annulaire (120e) est configurée pour former une partie d'extrémité fermée (144) de la pluralité de parois annulaires (120) au niveau de la première extrémité (124) du dispositif de chauffage résistif (108), dans lequel la partie d'extrémité fermée (144) ferme des extrémités (128) des canaux d'écoulement annulaires (122) au niveau de la première extrémité (124) du dispositif de chauffage résistif (108) afin de former des changements de direction dans le trajet d'écoulement sinueux alterné (130) au niveau de la première extrémité (124) du dispositif de chauffage résistif (108).

9. Système selon l'une quelconque des revendications 1 à 8, dans lequel le dispositif de chauffage résistif (108) comprend en outre un connecteur électrique (176), composé d'un matériau électriquement conducteur, situé au centre (C) du dispositif de chauffage résistif (108) qui connecte électriquement ensemble une paire intérieure des parois annulaires (120a, 120b), éventuellement dans lequel le connecteur électrique (176) comprend une paire d'éléments hélicoïdaux allongés (178a, 178b) qui sont disposés concentriquement autour de l'axe longitudinal (L-L) et qui sont entourés par la paroi la plus intérieure (120a), dans lequel une première extrémité (180a, 180b) de chaque élément hélicoïdal (178a, 178b) est connectée à une paroi respective (120a, 120b) de la paire intérieure des parois (120a, 120b) et des deuxièmes extrémités opposées (182a, 182b) des éléments hélicoïdaux (178a, 178b) sont connectées ensemble par le biais d'un élément de connexion (184) du connecteur électrique (176), en outre éventuellement dans lequel : (i) l'élément de connexion (184) comprend une bague annulaire ; et/ou (ii) les premières extrémités (180a, 180b) des éléments hélicoïdaux (178a, 178b) sont situées au niveau de la deuxième extrémité (126) du dispositif de chauffage résistif (108).

10. Système selon l'une quelconque des revendications 1 à 9, dans lequel le dispositif de chauffage résistif (108) comprend un corps monolithique intégral (186), éventuellement dans lequel le corps monolithique intégral (186) est fabriqué via une technique de fabrication additive, éventuellement sélectionnée parmi la fusion sélective par laser (SLM), le frittage sélectif par laser (SLS), le frittage laser direct de métaux (DMLS), la fusion par faisceau neutre (NBM), le soudage par faisceau d'électrons (EBW), le soudage par dépôt laser (LDW), la fusion par faisceau laser (LBM), le dépôt de métal par laser (LMD), la fusion par faisceau d'électrons (EBM), le dépôt direct d'énergie (DED), le prototypage rapide (RP) ou la fabrication rapide (RM).

11. Système selon l'une quelconque des revendications 1 à 10, dans lequel : (A) le boîtier (104) est connecté électriquement à l'une des première et deuxième bornes électriques (150, 152) du dispositif de chauffage résistif (108), moyennant quoi la borne électrique respective (150, 152) peut se connecter à la source d'énergie électrique (106) via le boîtier (104), éventuellement dans lequel la borne électrique respective (150, 152) est solidaire ou séparée d'une connexion mécanique entre le dispositif de chauffage résistif (108) et le boîtier (104) ; et/ou (B) les première et deuxième bornes électriques (150, 152) sont configurées pour être connectées électriquement par le biais d'une connexion filaire à la source d'énergie électrique (106), et dans lequel le système comprend en outre une source d'énergie électrique (106) qui est connectée aux première et deuxième bornes électriques (150, 152), la source d'énergie électrique (106) étant configurée pour fournir un courant continu ou un courant alternatif.

12. Système selon l'une quelconque des revendications 1 à 11, dans lequel une pluralité de ces dispositifs de chauffage résistifs (108) sont situés à l'intérieur du boîtier (104), et les dispositifs de chauffage résistifs (108) sont disposés en série ou en parallèle par rapport à l'entrée (110 ; 210 ; 310) et à la sortie (111 ; 211 ; 311) à des fins d'écoulement de fluide.

13. Système selon l'une quelconque des revendications 1 à 12, dans lequel le système de chauffage électrique (100) est un résistojet et est configuré à des fins d'installation dans un véhicule spatial, pour être utilisé lors du déplacement du véhicule spatial dans l'espace.

14. Procédé de production d'un écoulement de fluide à haute température, le procédé comprenant les étapes consistant à :
a) fournir un système de chauffage électrique (100) selon l'une quelconque des revendications 1 à 13 ;
b) fournir un fluide à chauffer à l'entrée de fluide (112) du dispositif de chauffage résistif (108) et lui permettre ainsi de s'écouler le long du trajet d'écoulement sinueux alterné (130) jusqu'à la sortie de fluide (113) du dispositif de chauffage résistif (108), le fluide fourni ayant une pression supérieure à une pression de gaz externe entourant l'extérieur (192) du boîtier (104) ;
c) appliquer un potentiel électrique aux première et deuxième bornes (150, 152) afin de chauffer l'écoulement de fluide dans le trajet d'écoulement sinueux alterné (130) par le biais du dispositif de chauffage résistif (108) ; et
d) expulser l'écoulement de fluide chauffé hors de la sortie (111 ; 211 ; 311) du boîtier (104).

15. Procédé selon la revendication 14, dans lequel : (i) le fluide chauffé est expulsé hors de la sortie (111 ; 211 ; 311) du boîtier (104) à une vitesse subsonique ou sonique via une buse convergente ; ou (ii) le fluide chauffé est expulsé de la sortie (111 ; 211 ; 311) du boîtier (104) à une vitesse supersonique ou hypersonique via une buse convergente-divergente.
